Europäisches Patentamt

**European Patent Office**

Office européen des brevets

(11) Publication number: **0 070 925**
**A1**

(12) **EUROPEAN PATENT APPLICATION**

(21) Application number: 81200735.9

(22) Date of filing: 29.06.81

(51) Int. Cl.³: **B 29 F 1/022**

(43) Date of publication of application:
09.02.83 Bulletin 83/6

(84) Designated Contracting States:
AT BE CH DE FR GB IT LI NL SE

(71) Applicant: EUROTOOL B.V.
Smitsweg 2
NL-3273 LK Westmaas(NL)

(72) Inventor: Van den Brink, Anthonie
Grote Riethure 10
NL-3273 LC Westmaas(NL)

(74) Representative: Menting, Lamert Johannes et al,
Dr. Kuyperstraat 6
NL-2514 BB Den Haag(NL)

(54) A nozzle for an injection mould.

(57) The invention provides a nozzle for an injection mould having a substantially cylindrical flow channel but all the same an accurate and large separation between the metal surfaces of the liquid and solid phase, while an almost constant temperature distribution is achieved in that flow channel. This is achieved because the inner sleeve (2) has a substantially conical tip (8, 8") which rests at least partially in a substantially conical support (7, 7', 7") of the outer sleeve (1). To reduce the heat transfer to a minimum the conical seats are provided with corrugations (12).

FIG.1

EP 0 070 925 A1

TITLE MODIFIED.
see front page

- 1 -

AN INJECTION NOZZLE FOR A PRESSURE DIE CASTING MATRIX

The present invention relates to an injection nozzle for a pressure die casting matrix, consisting of an inner sleeve with a substantially cylindrical flow channel, and an outer sleeve and a cap, cooperating therewith, jointly enclosing the inner sleeve such, that the feed wires for the heating elements, located in an annular space between the inner sleeve and outer sleeve, can be passed on to the outside.

When processing synthetic materials which are most sensitive to flow tensions an injection nozzle with a circular cross-section, so a substantially cylindrical flow channel, is preferred to an annular cross section, the so-called torpedo-system. The disadvantage of the open systems was, however, up to now that by the design around the casting opening of the sleeve the leading side, or the product-forming portion, remained too hot, which caused undesired deformation, long cooling periods of the manufactured product respectively. It is true indeed that in torpedo systems a better separation can be achieved between the cold and hot phase of the synthetic materials, but the flow tensions will always be considerably higher.

The present invention tends to provide an injection nozzle for a pressure die casting matrix with a substantially cylindrical flow channel, in which all the same an accurate and large separation between the metal surfaces of the liquid and solid phase is achieved. The invention should also guarantee the temperature in the flow channel to be almost constant by a minimal metal contact at the leading and rear side of the inner sleeve and by a special heating element.

This is achieved according to the invention in that the inner sleeve has a substantially conical point, bearing at least partially in a substantially conical seat of the outer sleeve.

According to a simple embodiment the substantially conical seat of the outer sleeve is corrugated to make the heat transfer as minimal as possible.

Furthermore in an embodiment which is applicable in practice it is determined that the conical point should be provided with a flange with a substantially rectangular cross-section which is supported by a ring, placed in a recess of the outer sleeve, and consisting of a heat-insulating material with minimal contact, for instance ceramic art. The conical point may be provided with an axial extension which taperingly widens in forward direction, and the leading surface of which is located in the leading surface of the outer sleeve. If a convex surface of the outer sleeve is located opposite the tapering point of the inner sleeve, then the two components define together an air chamber.

The outer sleeve and the cap may cooperate by means of screw thread, and the inner sleeve and the cap may cooperate by means of a groove.

The invention will be further elucidated hereinafter on the basis of the drawing, in which a number of embodiments of an injection nozzle according to the invention is illustrated by way of example. In the drawing is shown in:

fig. 1 an axial cross-section through a principle embodiment;

fig. 2 the same as in fig. 1 but with a corrugated support surface in the outer sleeve;

fig. 3 the same as in fig. 1 but according to an embodiment which is favourable in practice;

fig. 4 at a larger scale the portion of the injection nozzle indicated in fig. 3 by means of the circle IV.

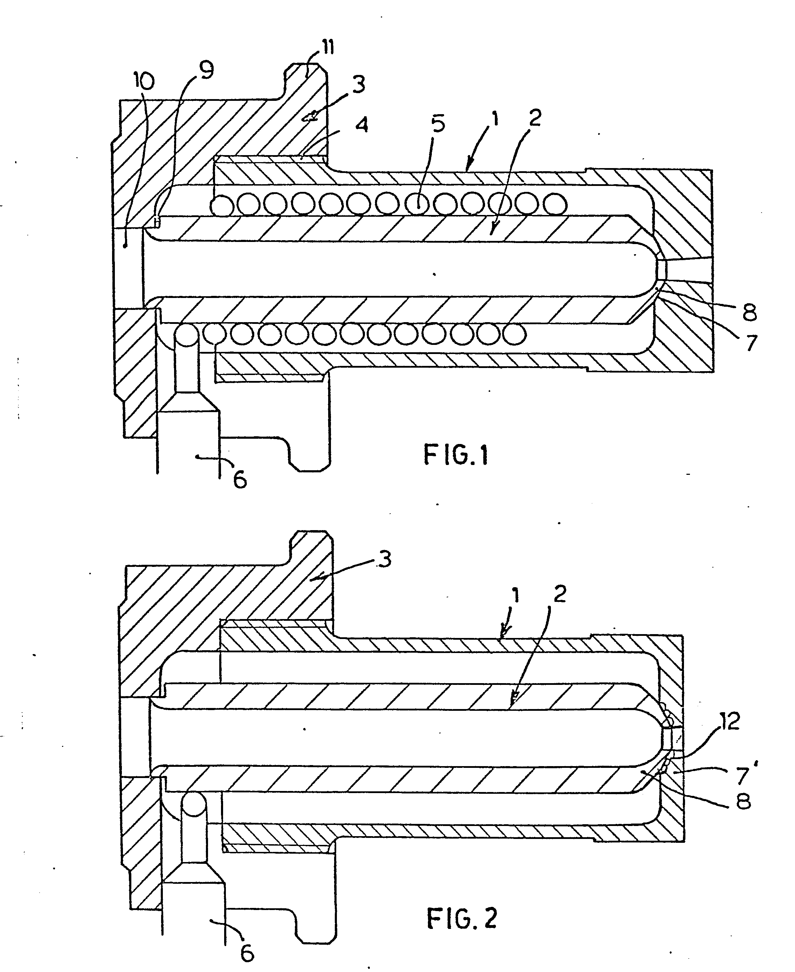

The principle embodiment of fig. 1 consists, as the other embodiments do, of an outer sleeve 1, an inner sleeve 2 and a cap 3.

The outer sleeve 1 and the inner sleeve 2 are each provided with screw thread 4 so that the cap 3 can be screwed on the outer sleeve 1, but other connections are also possible of course.

In the annular space between the outer sleeve 1 and the inner sleeve 2 an electric heating element 5 is provided which is connected to a feed wire 6, which is passed to the outside via the cap. The element 5 is shown only in fig. 1. The heating element can be formed by a cemented alternately wound spiralised heating element or by an element as described in Dutch patent application 77 00927 in applicant's name, in which in both elements a heat release can be constructed which is advised to measure.

Such injection sleeves can be built-in in a pressure die casting matrix, and then they provide an accurate separation between the liquid phase of the synthetic material in the heating portion of the casting tube and the cold portion of the molding cavity, at the right-hand side in fig. 1-3. Because of said separation an unlimited flow of continuously hot, liquid synthetic material can be cast into the molding cavity, cooled and deformed without the risk that in the next cycle the synthetic material in the casting opening is frozen, and so obstructed, or that the casting point on the product to be formed does not have a minimal size.

When doing so it goes without saying that a minimal flow resistance is pursued and a continuously cleaning flow movement in the casting channels has to be maintained.

According to the invention the outer sleeve 1 has a substantially conical seat 7 supporting the also substantially conical point 8 of the inner sleeve.

The inner sleeve 2 has a groove 9, provided at the end which faces awayfrom the substantially conical seat, said groove fitting in an opening 10 of the cap 3. By this route the supply of the synthetic material takes place. The cap 3 has a notched flange 11 to be able to screw the cap on the outer sleeve.

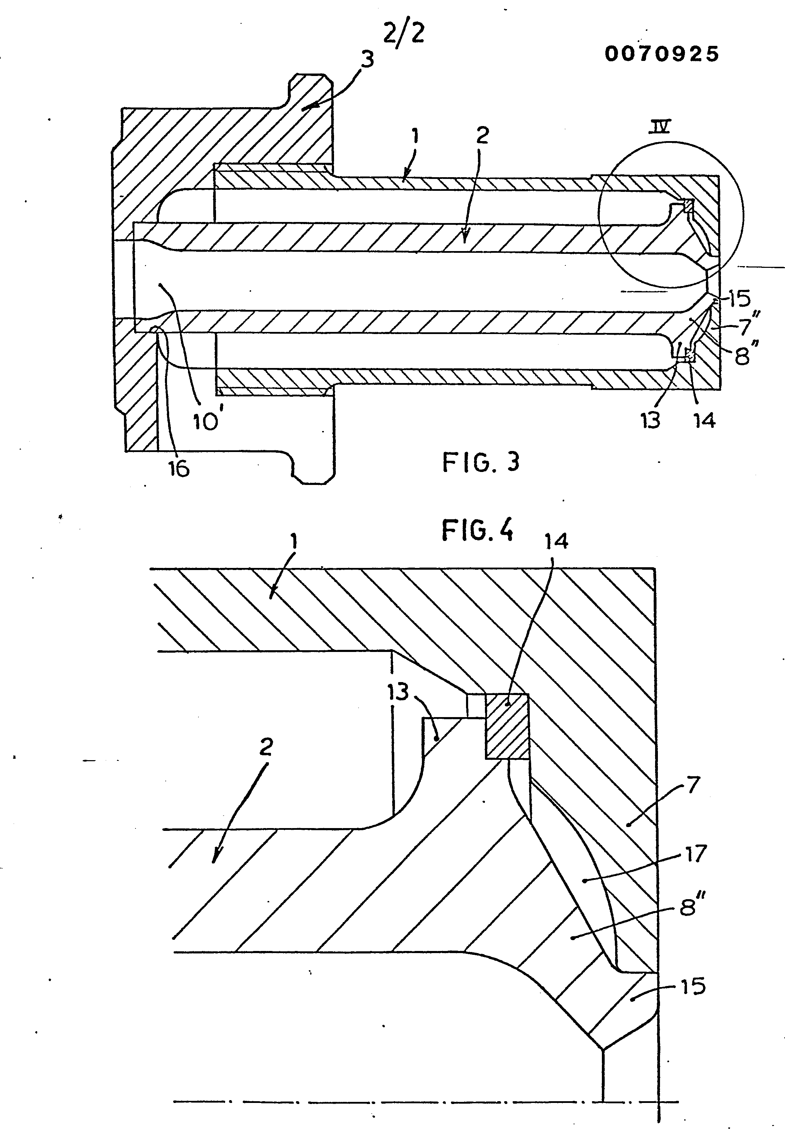

In fig. 2 the inner sleeve 2 is formed with the same conical point 8 as in fig. 1, but the substantially conical seat 7' is corrugated now, to make the heat transfer to the outer sleeve 1 as minimal as possible. With this construction alone it is possible to make the temperature distribution in the flow channel of the inner sleeve almost constant, but the embodiment of fig. 3 and 4 seems to satisfy better in practice, a.o. for strength-reasons. For die casting pressures up to the magnitude of 1500 ato are concerned.

As appears clearly from fig. 3 and particularly from fig. 4, the inner sleeve 2 has a flange 13 which cooperates with minimal contact with the outer sleeve 1 via a ring 14, consisting of a heat-insulating material, for instance ceramic art, and it has an axial extension 15 which protrudes through the hole of the outer sleeve. All forces are passed on now along portions of the inner and outer sleeve which have sufficient dimensions for that purpose, and yet this causes no disadvantageously large heat-tranfer.

In fig. 3 and 4 the pont 8" is really conical at the exterior, but contrary thereto the seat 7" is conical at the interior, so that an air chamber 17 is created which provides an additional contribution to the locally most necessary insulation.

As illustrated in fig. 3 it is also possible that the cap 3 has a groove 16 which supports the rear end of the inner sleeve 2, which rear end is made gradually wider in this event. Then the synthetic material to be processed is passed through the opening 10' in a better way than is illustrated in fig. 1 and 2.

As additional advantages of the invented injection nozzle can be mentioned: the small number of loose components, the small loss of energy, and the possibility to accurately control the temperature by including a thermocouple.

The claims also cover other embodiments than illustrated in the drawing here.

- 1 -

CLAIMS:

1. An injection nozzle for a pressure die casting matrix, consisting of an inner sleeve with a substantially cylindrical flow channel, and an outer sleeve and a cap, cooperating therewith, jointly enclosing the inner sleeve such, that the feed wires for the heating elements, located in an annular space between the inner sleeve and outer sleeve, can be passed on to the outside, characterized in that the inner sleeve (2) has a substantially conical point (8), bearing at least partially in a substantially conical seat (7, 7', 7'') of the outer sleeve.

2. An injection nozzle according to claim 1, characterized in that the substantially conical seat (7') of the outer sleeve is corrugated (12) to make the heat transfer as minimal as possible.

3. An injection nozzle according to claim 1, characterized in that the substantially conical leading point (7) of the outer sleeve only contacts at the location of a circle line at the front of the outer sleeve, because the cone-shape of the outer sleeve is two degrees larger than the inner sleeve, to keep the heat transfer as minimal as possible.

4. An injection nozzle according to claim 3, characterized in that the inner sleeve is resiliently constructed so that only during the high casting pressure the seat may be compressed completely.

5. An injection nozzle according to claim 1, characterized in that the conical point (8") is provided with a flange (13) with a substantially square cross section which is supported with minimal contact by a ring (14), placed in a recess of the outer sleeve and consisting of a heat-insulating material, for instance ceramic art.

6. An injection nozzle according to claim 1 or 3, characterized in that the conical point is provided with an axial extension (15) which taperingly widens in forward direction, and the leading surface of which is located in the leading surface of the outer sleeve.

7. An injection nozzle according to claim 4, characterized in that opposite the tapering point (8") of the inner sleeve a convex surface (7") of the outer sleeve is located, so that an air chamber (17) is defined.

8. An injection nozzle according to any of claims 1-5, characterized in that the outer sleeve and the cap cooperate with each other by means of screw thread, whereas the inner sleeve and the cap cooperate with the aid of one groove (9, 16).

9. An injection nozzle as illustrated in the drawing and/or discussed on the basis thereof.

HV/HH/LvdM

0070925

FIG.1

FIG.2

0070925

FIG. 3

FIG. 4

0070925

Application number

EP 81 20 0735

## European Patent Office

## EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | B 29 F 1/022 |
| E | NL - A - 80 01123 (EUROTOOL) <br> * The whole document * | 1-9 | |
| X | DE - A - 2 539 785 (SFR FORMBAU DANGELMAIER & CO) <br> * The whole document * | 1,8 | |
| X | DE - A - 2 940 818 (B. DANGEL-MAIER) <br> * Page 7, line 12 to page 9, line 4; figure 1 * | 1,8 | **TECHNICAL FIELDS SEARCHED (Int.Cl. 3)** <br> B 29 F |
| A | US - A - 4 273 525 (D.M. REITAN) <br> * The whole document * | 1,8 | |
| A | US - A - 2 814 831 (R.B. McKEE) <br> * Column 3, lines 20-28; figures 1,2 * | 2 | |
| A | FR - A - 2 242 224 (SACOMAT) <br> * The whole document * | 1,6 | **CATEGORY OF CITED DOCUMENTS** <br><br> X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br><br> &: member of the same patent family, corresponding document |

| | | | |
|---|---|---|---|
| The present search report has been drawn up for all claims | | | |
| Place of search <br> The Hague | Date of completion of the search <br> 25-02-1982 | Examiner <br> BOLLEN | |

EPO Form 1503.1 06.78